# EUROPEAN PATENT APPLICATION

(11) **EP 4 627 946 A1**
(43) Date of publication of application: **08.10.2025**
(21) Application number: 24182702.1
(22) Date of filing: 17.06.2024
(51) Int. Cl.: A24F 15/00, A24F 40/50

(54) **AEROSOL PROVISION DEVICE**

(30) Priority: 02.04.2024 CN 202410395244
(71) Applicant: Nicoventures Trading Limited, London WC2R 3LA (GB)
(72) Inventor: XIAO, Zhihuang, London (GB); LIN, Hao, Shanghai (CN)
(74) Representative: Whiting, Gary

(57) **Abstract**

An aerosol provision device is described comprising a near-field communication reader and a controller. The reader is for reading a near-field communication tag of a pack, wherein the pack is configured to contain a plurality of aerosol generating articles for use in the aerosol provision device. The controller activates the aerosol provision device based on an identifier provided by the near-field communication tag, initialises a counter of said controller based on the number of articles as indicated by the near-field communication tag, decrements the counter following use of each article of the plurality, and de-activates the aerosol provision device when the counter indicates that all articles have been used.

## Description

### Technical Field

The present specification relates to an aerosol provision device, a method of controlling such as device, a system including an aerosol provision device, and a pack that acts as a receptable for a plurality of aerosol generating articles for use in an aerosol provision device.

### Background

Aerosol provision devices are known that produce an aerosol during use, which is inhaled by a user. For example, tobacco heating devices heat an aerosol generating substrate (such as tobacco) to form an aerosol by heating, but not burning, the substrate. There remains a need for further developments in this field.

### Summary

In a first aspect, this specification describes an aerosol provision device comprising a near-field communication reader and a controller. The near-field communication reader is configured to read a near-field communication tag of a pack, wherein the pack is configured to contain a plurality of aerosol generating articles for use in the aerosol provision device. The controller is configured to: activate the aerosol provision device based on an identifier provided by the near-field communication tag; initialise a counter of said controller based on the number of articles as indicated by the near-field communication tag; decrement the counter following use of each article of the plurality; and de-activate the aerosol provision device when the counter indicates that all articles have been used.

The counter may be initialised based on an indication of a number of said articles stored by said pack.

In some example embodiments, de-activating the aerosol provision device does not de-activate the near-field communication reader.

The aerosol provision device may be configured to communicate with a remote device. Furthermore, the aerosol provision device may be configured to provide information relating to said pack to the remote device. The aerosol provision device may be configured to obtain user input from a user interface of the remote device.

In a second aspect, this specification describes a pack comprising a near-field communication tag configured to provide information to a near-field communication reader of an aerosol provision device, wherein the pack acts as a receptable for a plurality of aerosol generating articles for use in the aerosol provision device. The pack may further comprise said articles. The tag may comprise a near-field communication chip, a memory and an antenna.

In a third aspect, this specification describes a system comprising a pack (e.g. the pack of the second aspect) and an aerosol provision device (e.g. the device of the first aspect), wherein: the pack comprises a near-field communication tag configured to provide information to the aerosol provision device, wherein the pack is configured to contain a plurality of aerosol generating articles for use in the aerosol provision device; and the aerosol provision device comprises a near-field communication reader for reading the near-field communication tag of the pack and a controller configured to: activate the aerosol provision device based on an identifier provided by the near-field communication tag; initialise a counter of said controller based on the number of articles as indicated by the near-field communication tag; decrement the counter following use of each article of the plurality; and de-activate the aerosol provision device when the counter indicates that all articles have been used. The pack may further comprises said articles.

The system may further comprise a remote device (e.g. comprising a user interface). In some example embodiments, the aerosol provision device is configured to provide information relating to said pack to the remote device.

In some example embodiments, de-activating the aerosol provision device of the system does not de-activate the near-field communication reader of the aerosol provision device.

In a fourth aspect, this specification describes a method (e.g. a method of controlling an aerosol provision device), the method comprising: activating an aerosol provision device based on an identifier provided by a near-field communication tag of a pack, wherein the pack is configured to contain a plurality of aerosol generating articles for use in the aerosol provision device; initalising a counter based on the number of articles as indicated by the near-field communication tag; decrementing the counter each time an article of the plurality is used by said aerosol provision device; and de-activating the aerosol provision device when the counter indicates that all articles have been used.

Some example embodiments further comprise using a near-field communication reader of the aerosol provision device to read the near-field communication tag of the pack.

The counter may be initialised based on an indication of a number of said articles stored by said pack.

In some example embodiments, de-activating the aerosol provision device does not de-activate the near-field communication reader.

In a fifth aspect, this specification describes computer-readable instructions which, when executed by a computing apparatus, cause the computing apparatus to perform (at least) any method as described herein (including the methods of the fourth aspect described above).

In a sixth aspect, this specification describes a computer-readable medium (such as a non-transitory computer-readable medium) comprising program instructions stored thereon for performing (at least) any method as described herein (including the methods of the fourth aspect described above).

In a seventh aspect, this specification describes an apparatus comprising: at least one processor; and at least one memory including computer program code which, when executed by the at least one processor, causes the apparatus to perform (at least) any method as described herein (including the methods of the fourth aspect described above).

In an eighth aspect, this specification describes a computer program comprising instructions for causing an apparatus to perform at least the following: activate an aerosol provision device based on an identifier provided by a near-field communication tag of a pack, wherein the pack is configured to contain a plurality of aerosol generating articles for use in the aerosol provision device; initialise a counter based on the number of articles as indicated by the near-field communication tag; decrement the counter following use of each article of the plurality; and de-activate the aerosol provision device when the counter indicates that all articles have been used.

### Brief Description of the Drawings

Example embodiments will now be described, by way of example only, with reference to the following schematic drawings, in which:
FIG. 1 is a block diagram of a non-combustible aerosol provision device in accordance with an example embodiment;
FIG. 2 is a block diagram of a system in accordance with an example embodiment;
FIGS. 3 to 5 are flow charts showing algorithms in accordance with example embodiments;
FIG. 6 is a side-on cross-sectional view of an article for use with a non-combustible aerosol provision device in example embodiments;
FIG. 7 depicts an example implementation of the device of FIG. 1 with the outer cover removed;
FIG. 8 is a block diagram of a system in accordance with an example embodiment;
FIG. 9 is a flow chart showing an algorithm in accordance with an example embodiment; and
FIG. 10 is a block diagram of a processing system that may be used to implement one or more of the example embodiments.

### Detailed Description

As used herein, the term "delivery system" is intended to encompass systems that deliver at least one substance to a user, and includes non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

According to the present disclosure, a "combustible" aerosol provision system is one where a constituent aerosol-generating material of the aerosol provision system (or component thereof) is combusted or burned during use in order to facilitate delivery of at least one substance to a user.

According to the present disclosure, a "non-combustible" aerosol provision system is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device thereof, may comprise a power source and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants.

The aerosol-generating material may comprise one or more active substances and/or flavours, one or more aerosol-former materials, and optionally one or more other functional material.

The aerosol-generating material may comprise or be in the form of an aerosol-generating film. The aerosol-generating film may comprise a binder, such as a gelling agent, and an aerosol former. Optionally, a substance to be delivered and/or filler may also be present. The aerosol-generating film may be substantially free from botanical material. In particular, in some embodiments, the aerosol-generating material is substantially tobacco free.

A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor.

A susceptor is a material that is heatable by penetration with a varying magnetic field, such as an alternating magnetic field. The susceptor may be an electrically-conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically-conductive and magnetic, so that the susceptor is heatable by both heating mechanisms. The device that is configured to generate the varying magnetic field is referred to as a magnetic field generator, herein.

An aerosol generator is an apparatus configured to cause aerosol to be generated from the aerosol-generating material. In some embodiments, the aerosol generator is a heater configured to subject the aerosol-generating material to heat energy, so as to release one or more volatiles from the aerosol-generating material to form an aerosol. In some embodiments, the aerosol generator is configured to cause an aerosol to be generated from the aerosol-generating material without heating. For example, the aerosol generator may be configured to subject the aerosol-generating material to one or more of vibration, increased pressure, or electrostatic energy.

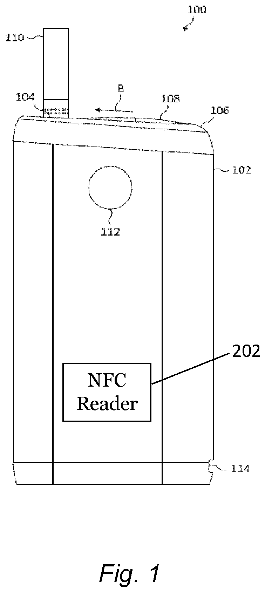

FIG. 1 is a block diagram of a non-combustible aerosol provision device, indicated generally by the reference numeral 100, in accordance with an example embodiment.

The device 100 is an example of a non-combustible aerosol provision device for generating aerosol from an aerosol generating medium/material. In broad outline, the device 100 may be used to heat a replaceable article 110 comprising an aerosol generating medium to generate an aerosol or other inhalable medium which is inhaled by a user of the device 100. The device 100 and replaceable article 110 together form a system.

The device 100 comprises a housing 102 (in the form of an outer cover) which surrounds and houses various components of the device 100. The device 100 has an opening 104 in one end, through which the article 110 may be inserted for heating by a heating assembly. In use, the article 110 may be fully or partially inserted into the heating assembly where it may be heated by one or more components of the heater assembly.

The device 100 of this example comprises a first end member 106 which comprises a lid 108 which is moveable relative to the first end member 106 to close the opening 104 when no article 110 is in place. In FIG. 1, the lid 108 is shown in an open configuration, however the lid 108 may move into a closed configuration. For example, a user may cause the lid 108 to slide in the direction of arrow "B".

The device 100 may also include a user-operable control element 112, such as a button or switch, which operates the device 100 when pressed. For example, a user may turn on the device 100 by operating the switch 112.

The device 100 may also comprise an electrical component, such as a socket/port 114, which can receive a cable to charge a battery of the device 100. For example, the socket 114 may be a charging port, such as a USB charging port.

The device 100 may also comprise a near-field communication (NFC) reader 202 that is configured to read an NFC tag of another device, as discussed in detail below.

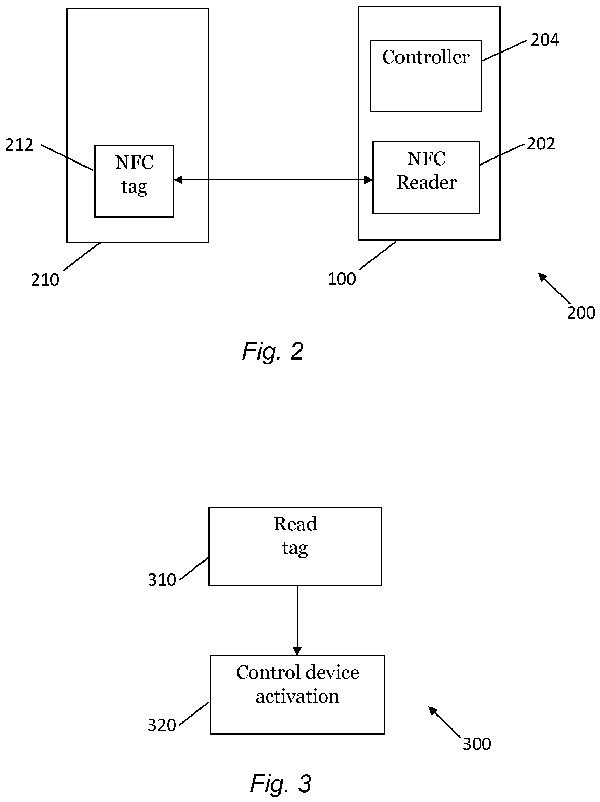

FIG. 2 is a block diagram of a system, indicated generally by the reference numeral 200, in accordance with an example embodiment. The system 200 comprises the device 100 described above with reference to FIG. 1 and further comprises a pack 210 that is configured, in use, to act as a receptacle for a plurality of aerosol generating articles (e.g. e-cigarettes, cartomisers, consumables, pods or similar removable articles, such as the removable article 110) for use by the device 100. In use, the pack 210 may include the said aerosol generating articles.

The pack 210 includes a near-field communication (NFC) tag 212. The aerosol provision device 100 comprises the near-field communication (NFC) reader 202 described above for reading the NFC tag 212 of the pack. The aerosol provision device 100 further comprises a controller 204 (not shown in FIG. 1).

The NFC tag 212 of the pack is configured to provide information to the NFC reader 202 of the aerosol provision device 100. The tag 212 may comprise a near-field communication chip, a memory and an antenna. The pack 210 acts as a receptable for a plurality of articles (such as instances of the removable article 110) for use in the aerosol provision device and may further contain instances of said aerosol generating articles.

FIG. 3 is a flow chart showing an algorithm, indicated generally by the reference numeral 300, in accordance with an example embodiment. The algorithm 300 may be implemented at the device 100 (e.g. by the controller 204).

The algorithm 300 starts at operation 310 where the NFC tag 212 (or a similar tag) is read. The operation 310 may be implemented by the NFC reader 202 of the device 100 described above. Then, at operation 320, activation of the device 100 is controlled based, at least in part, on the tag details read in the operation 310.

The algorithm 300 may include determining that the tag identifies a pack that has not previously been used. If the pack has been previously used, the algorithm 300 may terminate without activating the device 100.

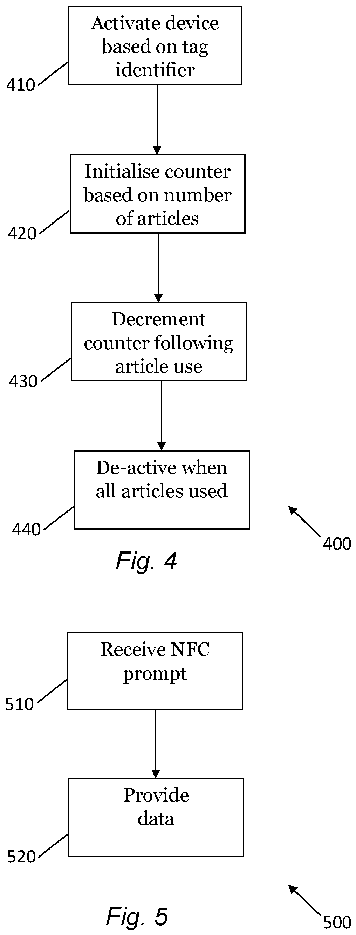

FIG. 4 is a flow chart showing an algorithm, indicated generally by the reference numeral 400, in accordance with an example embodiment. The algorithm 400 is an example implementation of the operation 320 of the algorithm 300 described above.

The algorithm 400 starts at operation 410, where an aerosol provision device (e.g. the device 100) is activated based on an identifier provided by an NFC tag of a pack (e.g. the tag 212). For example, the device (e.g. the controller 204) may check the identifier to check whether the pack has previously been used with the aerosol provision device; as noted above, if the pack has previously been used, then the algorithm 400 may terminate without activating the device 100. Thus, in some example embodiments, a pack that has been used to activate a first device will not be able to active a second device.

At operation 420, a counter is initialised based on the number of articles as indicated by the NFC tag. For example, the number of articles contained within the pack may be stored in a memory of the tag and provided as part of data provided by the NFC tag to the NFC reader (e.g. from the tag 212 to the reader 202). Note that the operations 410 and 420 may be implemented at the same time, or in a different order. A number of alternatives to the operation 420 are possible. For example, a look-up table may be stored in the device and a tag identifier (stored at the tag 212) may link to data in the look-up table. Such data may include a number of articles provided by the pack, and may therefore be used to initialise the counter. By way of example, an identifier stored by the NFC tag 212 of a particular device 210 may link to an entry in a look-up table (e.g. stored at the device 100 or otherwise available to device 100) indicating that the pack includes 20 articles, having flavour X and heating temperature profile Y.

At operation 430, the counter is decremented each time one of the articles of the pack is used (i.e. consumed by a user using the device 100).

At operation 440, the aerosol provision device (e.g. the device 100) is de-activated when the counter indicates that all articles have been used. Note that de-activating the aerosol provision device does not generally de-activate the NFC reader 202 since the NFC reader may be required to identify a new pack. In some example embodiments, the device may be de-activated by default; for example, the device (such as the device 100) may in a deactivated stated unless the counter has a value greater than or equal to 1.

Thus, the algorithm 400 enables an aerosol provision device to be activated when a pack containing aerosol generating articles (e.g. e-cigarettes, cartomisers, consumables, pods or similar removable articles) is newly identified. When the algorithm determines that all of those articles have been used, the aerosol provision device is de-activated.

FIG. 5 is a flow chart showing an algorithm, indicated generally by the reference numeral 500, in accordance with an example embodiment. The algorithm 500 may be implemented at the NFC tag 212.

The algorithm 500 starts at operation 510 in which an NFC tag of a pack receives an NFC prompt (for example from the NFC reader 202). The NFC tag may be a passive device that receives power from the prompt (i.e. from the NFC reader 202).

At operation 520, the NFC tag provides data in response to the prompt. The data may include an identifier of the NFC tag (identifying the pack) and/or other data stored by the NFC tag, such as the number of articles stored by the pack. The information provided may be used in the operation 410 and/or the operation 420 of the algorithm 400 described above. For example, an identifier may be used by a look-up table to obtain information relating to the pack.

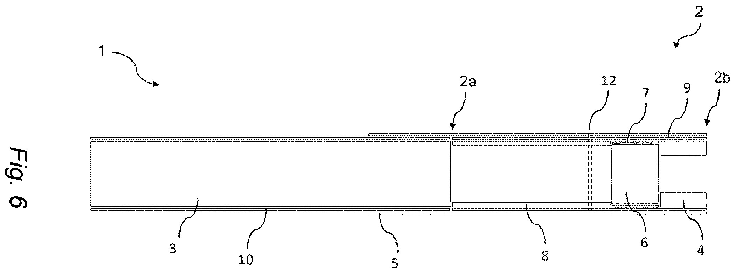

FIG. 6 is a side-on cross-sectional view of an article, indicated generally by the reference numeral 1, for use with a non-combustible aerosol provision device, such as the device 100 described above. The pack 210 described above may contain a plurality of articles 1. The article 1 is therefore an example implementation of the removable article 110 described above.

The article 1 comprises a mouthpiece 2, and a cylindrical rod of aerosol generating material 3 (e.g. tobacco material) connected to the mouthpiece 2. The aerosol generating material 3, also referred to herein as an aerosol generating substrate 3, comprises at least one aerosol forming material (such as glycerol). In alternative examples, the aerosol forming material can be another material as described herein or a combination thereof. The aerosol forming material has been found to improve the sensory performance of the article, by helping to transfer compounds such as flavour compounds from the aerosol generating material to the consumer.

The part of the mouthpiece which comes into contact with a consumer's lips may be a paper tube, which is either hollow or surrounds a cylindrical body of filter material.

As shown in FIG. 6, the mouthpiece 2 of the article 1 comprises an upstream end 2a adjacent to the aerosol generating substrate 3 and a downstream end 2b distal from the aerosol generating substrate 3. At the downstream end 2b, the mouthpiece 2 has a hollow tubular element 4 formed from filamentary tow. This has advantageously been found to significantly reduce the temperature of the outer surface of the mouthpiece 2 at the downstream end 2b of the mouthpiece which comes into contact with a consumer's mouth when the article 1 is in use. In addition, the use of the tubular element 4 has also been found to significantly reduce the temperature of the outer surface of the mouthpiece 2 even upstream of the tubular element 4.

In the present example, the article 1 has an outer circumference of about 21 mm (i.e. the article is in the demi-slim format). In other example embodiments, the article can be provided in other formats.

The outer circumference of the mouthpiece 2 is substantially the same as the outer circumference of the rod of aerosol generating material 3, such that there is a smooth transition between these components. In the present example, the outer circumference of the mouthpiece 2 is about 20.8mm. A tipping paper 5 is wrapped around the full length of the mouthpiece 2 and over part of the rod of aerosol generating material 3 and has an adhesive on its inner surface to connect the mouthpiece 2 and rod 3. In the present example, the tipping paper 5 extends 5 mm over the rod of aerosol generating material 3 but it can alternatively extend by other lengths. The tipping paper 5 can have a basis weight which is higher than the basis weight of plug wraps used in the article 1, for instance a basis weight of 40 gsm to 80 gsm. The outer circumference of the tipping paper 5, once wrapped around the mouthpiece 2, is about 21mm.

The mouthpiece 2, in the present example, includes a body of material 6 upstream of the hollow tubular element 4, in this example adjacent to and in an abutting relationship with the hollow tubular element 4. The body of material 6 and hollow tubular element 4 each define a substantially cylindrical overall outer shape and share a common longitudinal axis. The body of material 6 is wrapped in a first plug wrap 7.

In the present example the hollow tubular element 4 is a first hollow tubular element 4 and the mouthpiece includes a second hollow tubular element 8, also referred to as a cooling element, upstream of the first hollow tubular element 4.

The second hollow tubular element 8 is located around and defines an air gap within the mouthpiece 2 which acts as a cooling segment. The air gap provides a chamber through which heated volatilised components generated by the aerosol generating material 3 flow.

In the present example, the first hollow tubular element 4, body of material 6 and second hollow tubular element 8 are combined using a second plug wrap 9 which is wrapped around all three sections.

In the present example, the aerosol generating material 3 is wrapped in a wrapper 10. The wrapper 10 can, for instance, be a paper or paper-backed foil wrapper. The wrapper may comprise aluminium foil.

The aerosol generating material 3 may be provided as a cylindrical rod of aerosol generating material, for example having a length of about 10 mm to 100 mm. The aerosol generating material or substrate may be formed from tobacco material as described herein, which includes a tobacco component. In the tobacco material described herein, the tobacco component may contain paper reconstituted tobacco. The tobacco component may also contain leaf tobacco, extruded tobacco, and/or bandcast tobacco. The tobacco material may be provided in the form of cut rag tobacco.

In the tobacco material described herein, the tobacco material may contain a filler component. The filler component is generally a non-tobacco component, that is, a component that does not include ingredients originating from tobacco.

In the tobacco material described herein, the tobacco material contains an aerosol forming material. In this context, an "aerosol forming material" is an agent that promotes the generation of an aerosol. An aerosol forming material may promote the generation of an aerosol by promoting an initial vaporisation and/or the condensation of a gas to an inhalable solid and/or liquid aerosol. In some embodiments, an aerosol forming material may improve the delivery of flavour from the aerosol generating material. In general, any suitable aerosol forming material or agents may be included in the aerosol generating material of the invention, including those described herein. Other suitable aerosol forming materials include, but are not limited to: a polyol such as sorbitol, glycerol, and glycols like propylene glycol or triethylene glycol; a non-polyol such as monohydric alcohols, high boiling point hydrocarbons, acids such as lactic acid, glycerol derivatives, esters such as diacetin, triacetin, triethylene glycol diacetate, triethyl citrate or myristates including ethyl myristate and isopropyl myristate and aliphatic carboxylic acid esters such as methyl stearate, dimethyl dodecanedioate and dimethyl tetradecanedioate. In some embodiments, the aerosol forming material may be glycerol, propylene glycol, or a mixture of glycerol and propylene glycol. Glycerol may be present in an amount of from 10 to 20 % by weight of the tobacco material, for example 13 to 16 % by weight of the composition, or about 14% or 15% by weight of the composition. Propylene glycol, if present, may be present in an amount of from 0.1 to 0.3% by weight of the composition.

The aerosol forming material may be included in any component, for example any tobacco component, of the tobacco material, and/or in the filler component, if present. Alternatively or additionally the aerosol forming material may be added to the tobacco material separately. In either case, the total amount of the aerosol forming material in the tobacco material can be as defined herein.

The tobacco material described herein can contain an aerosol modifying agent, such as any of the flavours described herein. In one embodiment, the tobacco material contains menthol, forming a mentholated article.

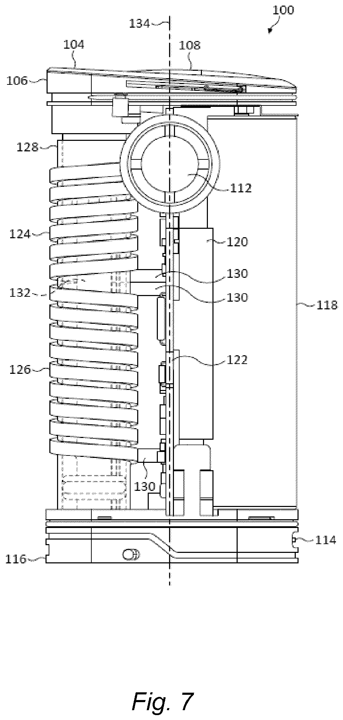

FIG. 7 depicts an example implementation of the device 100 (as shown in FIG. 1) with the outer cover 102 removed and without an article 110 present. The device 100 is provided by way of example only; the skilled person will be aware of many alternative embodiments. The device 100 defines a longitudinal axis 134.

As shown in FIG. 7, the first end member 106 is arranged at one end of the device 100 and a second end member 116 is arranged at an opposite end of the device 100. The first and second end members 106, 116 together at least partially define end surfaces of the device 100. For example, the bottom surface of the second end member 116 at least partially defines a bottom surface of the device 100. Edges of the outer cover 102 may also define a portion of the end surfaces. In this example, the lid 108 also defines a portion of a top surface of the device 100.

The end of the device closest to the opening 104 may be known as the proximal end (or mouth end) of the device 100 because, in use, it is closest to the mouth of the user. In use, a user inserts an article 110 into the opening 104, operates the user control 112 (e.g. a button) to begin heating the aerosol generating material and draws on the aerosol generated in the device. This causes the aerosol to flow through the device 100 along a flow path towards the proximal end of the device 100. Of course, the control 112 may be omitted in many example embodiments (e.g. if user draw detection is used to trigger heating).

The other end of the device furthest away from the opening 104 may be known as the distal end of the device 100 because, in use, it is the end furthest away from the mouth of the user. As a user draws on the aerosol generated in the device, the aerosol flows away from the distal end of the device 100.

The device 100 further comprises a power source 118. The power source 118 may be, for example, a battery, such as a rechargeable battery or a non-rechargeable battery. Examples of suitable batteries include, for example, a lithium battery (such as a lithium-ion battery), a nickel battery (such as a nickel-cadmium battery), and an alkaline battery. The battery is electrically coupled to the heating assembly to supply electrical power when required and under control of a controller (not shown) to heat the aerosol generating material. In this example, the battery is connected to a central support 120 which holds the battery 118 in place.

The device further comprises at least one electronics module 122. The electronics module 122 may comprise, for example, a printed circuit board (PCB). The PCB 122 may support at least one controller, such as a processor, and memory. The PCB 122 may also comprise one or more electrical tracks to electrically connect together various electronic components of the device 100. For example, the battery terminals may be electrically connected to the PCB 122 so that power can be distributed throughout the device 100. The socket 114 may also be electrically coupled to the battery via the electrical tracks. The electronics module 122 may include the NFC reader 202 and/or the controller 204 described above (although one or both of these components could be provided elsewhere).

In the example device 100, the heating assembly is an inductive heating assembly and comprises various components to heat the aerosol generating material of the article 110 via an inductive heating process. Induction heating is a process of heating an electrically conducting object (such as a susceptor) by electromagnetic induction. An induction heating assembly may comprise an inductive element, for example, one or more inductor coils, and a device for passing a varying electric current, such as an alternating electric current, through the inductive element. The varying electric current in the inductive element produces a varying magnetic field. The varying magnetic field penetrates a susceptor suitably positioned with respect to the inductive element, and generates eddy currents inside the susceptor. The susceptor has electrical resistance to the eddy currents, and hence the flow of the eddy currents against this resistance causes the susceptor to be heated by Joule heating. In cases where the susceptor comprises ferromagnetic material such as iron, nickel or cobalt, heat may also be generated by magnetic hysteresis losses in the susceptor, i.e. by the varying orientation of magnetic dipoles in the magnetic material as a result of their alignment with the varying magnetic field. In inductive heating, as compared to heating by conduction for example, heat is generated inside the susceptor, allowing for rapid heating. Further, there need not be any physical contact between the inductive heater and the susceptor, allowing for enhanced freedom in construction and application. It should be noted that whilst inductive heating is described herein, other forms of heating could be used in some example embodiments (e.g. resistive heating).

The induction heating assembly of the example device 100 comprises a susceptor arrangement 132 (herein referred to as "a susceptor"), a first inductor coil 124 and a second inductor coil 126. The first and second inductor coils 124, 126 are made from an electrically conducting material. In this example, the first and second inductor coils 124, 126 are made from Litz wire/cable which is wound in a helical fashion to provide helical inductor coils 124, 126. Litz wire comprises a plurality of individual wires which are individually insulated and are twisted together to form a single wire. Litz wires are designed to reduce the skin effect losses in a conductor. In the example device 100, the first and second inductor coils 124, 126 are made from copper Litz wire which has a rectangular cross section. In other examples the Litz wire can have other shape cross sections, such as circular. It should be noted that although two inductor coils are shown, this is not essential to all example embodiments; a single inductor coil could be provided, or more than two inductor coils could be provided.

The first inductor coil 124 is configured to generate a first varying magnetic field for heating a first section of the susceptor 132 and the second inductor coil 126 is configured to generate a second varying magnetic field for heating a second section of the susceptor 132. In this example, the first inductor coil 124 is adjacent to the second inductor coil 126 in a direction along the longitudinal axis 134 of the device 100 (that is, the first and second inductor coils 124, 126 to not overlap). The susceptor arrangement 132 may comprise a single susceptor, or two or more separate susceptors. Ends 130 of the first and second inductor coils 124, 126 can be connected to the PCB 122.

It will be appreciated that the first and second inductor coils 124, 126, in some examples, may have at least one characteristic different from each other. For example, the first inductor coil 124 may have at least one characteristic different from the second inductor coil 126. More specifically, in one example, the first inductor coil 124 may have a different value of inductance than the second inductor coil 126. In FIG. 7, the first and second inductor coils 124, 126 are of different lengths such that the first inductor coil 124 is wound over a smaller section of the susceptor 132 than the second inductor coil 126. Thus, the first inductor coil 124 may comprise a different number of turns than the second inductor coil 126 (assuming that the spacing between individual turns is substantially the same). In yet another example, the first inductor coil 124 may be made from a different material to the second inductor coil 126. In some examples, the first and second inductor coils 124, 126 may be substantially identical.

In this example, the first inductor coil 124 and the second inductor coil 126 are wound in opposite directions. This can be useful when the inductor coils are active at different times. For example, initially, the first inductor coil 124 may be operating to heat a first section/portion of the article 110, and at a later time, the second inductor coil 126 may be operating to heat a second section/portion of the article 110. Winding the coils in opposite directions helps reduce the current induced in the inactive coil when used in conjunction with a particular type of control circuit. In FIG. 7, the first inductor coil 124 is a right-hand helix and the second inductor coil 126 is a left-hand helix. However, in another embodiment, the inductor coils 124, 126 may be wound in the same direction, or the first inductor coil 124 may be a left-hand helix and the second inductor coil 126 may be a right-hand helix.

The susceptor 132 of this example is hollow and therefore defines a receptacle within which aerosol generating material is received. For example, the article 110 can be inserted into the susceptor 132. In this example the susceptor 120 is tubular, with a circular cross section.

The susceptor 132 may be made from one or more materials. Preferably the susceptor 132 comprises carbon steel having a coating of Nickel or Cobalt.

The device 100 further comprises an insulating member 128 which may be generally tubular and at least partially surround the susceptor 132. The insulating member 128 may be constructed from any insulating material, such as plastic for example. In this particular example, the insulating member is constructed from polyether ether ketone (PEEK). The insulating member 128 may help insulate the various components of the device 100 from the heat generated in the susceptor 132.

The insulating member 128 can also fully or partially support the first and second inductor coils 124, 126. For example, as shown in FIG. 7, the first and second inductor coils 124, 126 are positioned around the insulating member 128 and are in contact with a radially outward surface of the insulating member 128. In some examples the insulating member 128 does not abut the first and second inductor coils 124, 126. For example, a small gap may be present between the outer surface of the insulating member 128 and the inner surface of the first and second inductor coils 124, 126.

In a specific example, the susceptor 132, the insulating member 128, and the first and second inductor coils 124, 126 are coaxial around a central longitudinal axis of the susceptor 132.

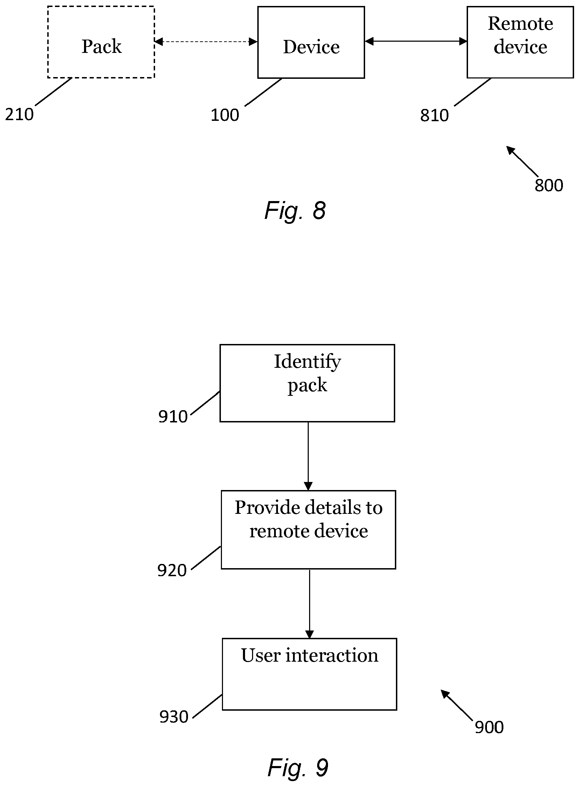

FIG. 8 is a block diagram of a system, indicated generally by the reference numeral 800, in accordance with an example embodiment. The system 800 comprises the aerosol provision device 100 and a remote device 810. The remote device may be a mobile phone or similar device (such as a smartwatch or other wearable device). The device 100 is in two-way communication with the remote device 810, for example using a wireless communications technology, such as Bluetooth^{®}. The device 100 may also be in communication with the pack 210 described above (although in some implementations, the device need only be in communication with the pack 210 once in order to obtain information such as the pack identity and how many devices are stored by the pack).

The aerosol provision device 100 may be configured to provide information relating to the pack 210 to the remote device 810. For example, a pack identifier and/or a number of articles contained within the pack may be provided to the remote device. The remote device may include a user interface so that information (such as the number of articles remaining to be used) can be displayed. For example, an implementation of the operation 430 described above (i.e. decrementing the counter of usable articles) may result in a corresponding counter displayed on the user interface being decremented.

The device 100 may be configured to obtain user input from a user interface of the remote device 810. For example, a user may be prompted to indicate whether or not an identified pack should be used. Such a prompt may be requested before the algorithm 400 is implemented.

FIG. 9 is a flow chart showing an algorithm, indicated generally by the reference numeral 900, in accordance with an example embodiment. The algorithm 900 may be implemented by the system 800 described above.

The algorithm 900 starts at operation 900, where a pack (e.g. the pack 210) is identified. This may be based on an identifier provided by an NFC tag of the pack, as discussed in detail above.

At operation 920, details of the identified pack are provided to the remote device 810. The device 100 is typically close to the pack 210 enabling the device to use NFC principles to obtain data stored with an NFC tag of the pack. On successful receipt of such data, the device 100 may provide some sort of success indication (such as an audible deep or a vibration that it detectable by a typical user).

At operation 930, a user is able to interface with the remote device (e.g. via a user interface). The operation 930 may include the display of information to the user and/or the input of instructions by the user via the user interface.

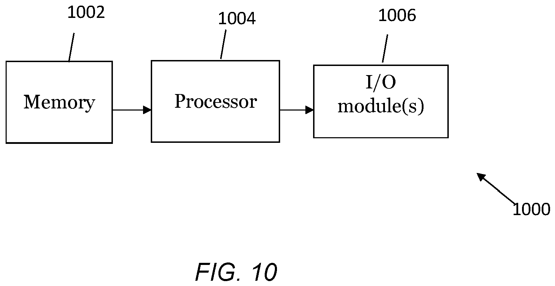

FIG. 10 is a block diagram of a processing system, indicated generally by the reference numeral 1000, that may be used to implement one or more of the example embodiments described previously. The processing system 1000 may, for example, be (or may include) the apparatus referred to in the claims below.

The processing system 1000 may comprise a processor 1004, a memory 1002 coupled to the processor (e.g. comprising a random access memory (RAM) and/or a read only memory (ROM)). The processing system 1000 may also comprise one or more input/output (I/O) modules 1006, such as one or more user interface modules.

The memory 1002 may comprise code which, when executed by the processor 1004 implements aspects of the methods and algorithms described herein.

The memory 1002 and the processor 1004 may form part of the controller 204 of the aerosol provision device 100 described above. The I/O module 1006 may form part of the device 100, but may also (or alternatively) or part of the remote device 810 described above.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

1. An aerosol provision device comprising:
a near-field communication reader for reading a near-field communication tag of a pack, wherein the pack is configured to contain a plurality of aerosol generating articles for use in the aerosol provision device; and
a controller configured to:
activate the aerosol provision device based on an identifier provided by the near-field communication tag;
initialise a counter of said controller based on the number of articles as indicated by the near-field communication tag;
decrement the counter following use of each article of the plurality; and
de-activate the aerosol provision device when the counter indicates that all articles have been used.

2. An aerosol provision device as claimed in claim 1, wherein the counter is initialised based on an indication of a number of said articles stored by said pack.

3. An aerosol provision device as claimed in claim 1 or claim 2, wherein de-activating the aerosol provision device does not de-activate the near-field communication reader.

4. An aerosol provision device as claimed in any one of claims 1 to 3, wherein the aerosol provision device is configured to communicate with a remote device.

5. An aerosol provision device as claimed in claim 4, wherein the aerosol provision device is configured to provide information relating to said pack to the remote device.

6. An aerosol provision device as claimed in claim 4 or claim 5, wherein the aerosol provision device is configured to obtain user input from a user interface of the remote device.

7. A pack comprising a near-field communication tag configured to provide information to a near-field communication reader of an aerosol provision device, wherein the pack acts as a receptable for a plurality of aerosol generating articles for use in the aerosol provision device.

8. A pack as claimed in claim 7, further comprising said articles.

9. A pack as claimed in claim 7 or claim 8, wherein the tag comprises a near-field communication chip, a memory and an antenna.

10. A system comprising a pack and an aerosol provision device, wherein:
the pack comprises a near-field communication tag configured to provide information to the aerosol provision device, wherein the pack is configured to contain a plurality of aerosol generating articles for use in the aerosol provision device; and
the aerosol provision device comprises a near-field communication reader for reading the near-field communication tag of the pack and a controller configured to: activate the aerosol provision device based on an identifier provided by the near-field communication tag; initialise a counter of said controller based on the number of articles as indicated by the near-field communication tag; decrement the counter following use of each article of the plurality; and de-activate the aerosol provision device when the counter indicates that all articles have been used.

11. A system as claimed in claim 10, further comprising a remote device.

12. A method comprising:
activating an aerosol provision device based on an identifier provided by a near-field communication tag of a pack, wherein the pack is configured to contain a plurality of aerosol generating articles for use in the aerosol provision device;
initalising a counter based on the number of articles as indicated by the near-field communication tag;
decrementing the counter each time an article of the plurality is used by said aerosol provision device; and
de-activating the aerosol provision device when the counter indicates that all articles have been used.

13. A method as claimed in claim 12, further comprising using a near-field communication reader of the aerosol provision device to read the near-field communication tag of the pack.

14. A method as claimed in claim 12 or claim 13, wherein the counter is initialised based on an indication of a number of said articles stored by said pack.

15. A computer program comprising instructions for causing an apparatus to perform at least the following:
activate an aerosol provision device based on an identifier provided by a near-field communication tag of a pack, wherein the pack is configured to contain a plurality of aerosol generating articles for use in the aerosol provision device;
initialise a counter based on the number of articles as indicated by the near-field communication tag;
decrement the counter following use of each article of the plurality; and
de-activate the aerosol provision device when the counter indicates that all articles have been used.
